# EUROPÄISCHE PATENTANMELDUNG

(11) **EP 2 660 557 A1**
(43) Veröffentlichungstag der Anmeldung: **06.11.2013**
(21) Anmeldenummer: 13001682.7
(22) Anmeldetag: 03.04.2013
(51) Int. Cl.: G01B 11/245

(54) **Vorrichtung und Verfahren zur 3D-Erfassung eines Rohres**

(30) Priorität: 30.04.2012 DE 102012008433
(71) Anmelder: SMS Meer GmbH, 41069 Mönchengladbach (DE)
(72) Erfinder: Topüth, Manfred, 41849 Wassenberg (DE); Krauhausen, Michael, 52066 Aachen (DE); Vochsen, Jochen, Dr., 41812 Erkelenz (DE)
(74) Vertreter: Kross, Ulrich

(57) **Zusammenfassung**

Die Erfindung betrifft eine Vorrichtung zum Erfassen der dreidimensionalen Form eines Rohres (1), umfassend eine Haltestruktur (2) für das Rohr (1) sowie eine Einrichtung (3) zur Erfassung der Rohrform, dadurch gekennzeichnet, dass die Haltestruktur (2) wenigstens ein Auflager (4) zum Abstützen des Rohres (1) von innen aufweist und die Einrichtung (3) zur Erfassung der Rohrform ein berührungsloses Erfassen der Rohrform erlaubt, wobei das Rohr (1) und die Einrichtung (3) zur Erfassung der Rohrform über die gesamte Länge des Rohres (1) relativ zueinander beweglich angeordnet sind. Darüber hinaus betrifft die Erfindung auch ein Verfahren zum Erfassen der dreidimensionalen Form eines Rohres (1) umfassend die Schritte des Haltens des Rohres (1) sowie des Erfassens der Rohrform, dadurch gekennzeichnet, dass das Halten des Rohres (1) mittels zumindest eines Auflagers (4) zum Abstützen des Rohres (1) von innen erfolgt und ein berührungsloses Erfassen der Rohrform durchgeführt wird, wobei die Erfassung der Rohrform über die gesamte Länge des Rohres (1) erfolgt.

## Beschreibung

### 1. Gebiet der Erfindung

Die Erfindung betrifft eine Vorrichtung sowie ein Verfahren zum Erfassen der dreidimensionalen Form eines Rohres, wobei die Vorrichtung eine Haltestruktur für das Rohr sowie eine Einrichtung zur Erfassung der Rohrform umfasst. Das Verfahren umfasst analog die Schritte des Haltens des Rohres sowie des Erfassens der Rohrform.

### 2. Stand der Technik

Rohre werden üblicherweise entweder nahtlos mittels eines Lochdorn- und nachgeschalteten Walzprozesses aus einem Metallblock oder aber durch Verschweißen eines vorab in eine gewünschte Form umgeformten Blechs hergestellt. Hierbei wird insbesondere bei der Verwendung derartiger Rohre als Pipeline-Elemente für die Förderung flüssiger und gasförmiger Medien unter hohem Druck besonderer Wert gelegt auf die Qualität und Formgenauigkeiten der Rohre.

Die Qualitätsanforderungen erfassen nicht nur die Oberflächengüte sowie geringst mögliche Abweichungen von der vorab festgelegten Wandstärke über die gesamte Rohrlänge, sondern ebenso die dreidimensionale Form des gesamten Rohres sowie mehreren Stellen der zweidimensionalen Kontur der Rohrquerschnitts.

Vor allem an Pipelinerohre, die auf dem Meeresboden verlegt werden und somit am Einsatzort nicht nur den erforderlichen Innendrücken, sondern ebenso den hohen Außendrücken ausgesetzt sind, bestehen besonders hohe Anforderungen an die Form des Rohres über seine gesamte Länge. Bereits geringe Abweichungen von der gewünschten Rundheit des Rohrquerschnitts, die so genannte Ovalität, können zu lokalen Eindrückungen des Rohres oder zu Schwierigkeiten beim Verschweißen zweier Rohre miteinander führen.

Die Rohrhersteller müssen daher üblicherweise sicherstellen, dass die Rundheit des Rohres über seine gesamte Länge, somit auch entfernt von den Rohrenden, innerhalb der geforderten Toleranzen liegt. Zur Bestimmung der Rohrkontur werden daher üblicherweise mechanische Messelemente wie Schieblehren oder Messzangen im Bereich der Rohrenden verwendet. Über die gesamte Rohrlänge wird dann üblicherweise an ein bis drei vorab festgelegten Messpunkten der Durchmesser des Rohres erfasst, um hierdurch auf die Rundheit oder Ovalität des gesamten Rohres Rückschlüsse ableiten zu können.

Hierdurch kann jedoch die gesamte Form des Rohres über dessen Länge kaum oder nur sehr aufwendig bestimmt werden. Darüber hinaus liegen die Rohre bei derartigen Messungen entweder im Lager oder auf einem Förderrollgang auf einer in Position und Ausrichtung nicht definierten begrenzten Anzahl von Auflagern auf, so dass sowohl Verbiegungen des Rohres über seine Länge als auch Verformungen der Kontur des Rohres aufgrund seines Eigengewichts einen nicht unerheblichen Einfluss auf die jeweilige Messung ausüben.

Es besteht daher ein Bedarf nach einem standardisierten Messverfahren zur Bestimmung der Rohrform und Rohrkontur derartiger Rohre, welches bisher noch nicht vorliegt. Ebenso besteht ein Bedürfnis, die zur Qualitätsbestimmung und Qualitätssicherung erforderlichen Messungen weitestgehend automatisiert und vorzugsweise auch standardisiert ausführen zu können.

### 3. Aufgabe der Erfindung

Es war daher eine Aufgabe der Erfindung, eine Vorrichtung sowie ein Verfahren zur Verfügung zu stellen, mittels derer die dreidimensionale Form eines Rohre über seine gesamte Länge reproduzierbar und ohne Beeinträchtigung durch Umgebungseinflüsse vorzugsweise automatisiert durchgeführt werden kann.

Diese Aufgabe wird im erfindungsgemäßen Sinne mittels einer Vorrichtung, umfassend die Merkmale des Anspruchs 1, sowie eines Verfahrens, umfassend die Merkmale des Anspruchs 10, gelöst. Vorteilhafte Ausgestaltungsformen der Erfindung sind in den jeweils abhängigen Patentansprüchen definiert.

### 4. Zusammenfassung der Erfindung

Im erfindungsgemäßen Sinne wird eine Haltestruktur zur Verfügung gestellt, die wenigstens ein Auflager zum Abstützen des Rohres von innen aufweist, wodurch situationsbedingte Umgebungseinflüsse wie der Ort der Messung, sei es auf einem Rollgang oder in einem Lager, vermieden werden können. Im erfindungsgemäßen Sinne erfolgt die Erfassung der Rohrform berührungslos, wobei das Rohr und die hierfür notwendige Einrichtung zur berührungslosen Erfassung der Rohrform über die gesamte Länge des Rohrs relativ zueinander beweglich angeordnet sind.

Diese Beweglichkeit von Rohr einerseits und Einrichtung zur Erfassung der Rohrform andererseits relativ zueinander kann ein Bewegen der Erfassungseinrichtung über ein ruhendes Rohr, ein Bewegen des Rohrs relativ zu einer fest angeordneten Erfassungseinrichtung sowie eine Bewegung beider Vorrichtungskomponenten zueinander umfassen. Bevorzugt wird jedoch eine Ausführungsform, bei der die Einrichtung zur Erfassung der Rohrform über die gesamte Länge eines allein auf der Haltestruktur ruhenden Rohres erfolgt, um hierdurch sämtliche Einflüsse auf die Erfassung der Rohrform allein durch die Bewegung des Rohres zu unterbinden.

Das erfindungsgemäße Verfahren umfasst entsprechend die Schritte des Haltens des Rohres von innen sowie des berührungslosen Erfassens der Rohrform mittels einer geeigneten Einrichtung über die gesamte Länge des Rohres, wobei hierbei das Rohr einerseits und die Einrichtung zum Erfassen der Rohrform andererseits zueinander relativ über die gesamte Länge des Rohres für den Erfassungsvorgang bewegt werden.

Hierdurch wird erstmals ein standardisierbares Verfahren zur Erfassung der dreidimensionalen Form eines gesamtes Rohres zur Verfügung gestellt, welches vollkommen reproduzierbare und überprüfbare Ergebnisse ohne die Notwendigkeit, örtliche Einflüsse zu berücksichtigen, zur Verfügung stellen kann.

Zur standardisierten Erfassung der dreidimensionalen Form des Rohres muss lediglich die Anzahl der Auflager zum Abstützen des Rohres sowie die Lage der jeweiligen Auflager innen an der Rohrinnenwand, ggf. auch die jeweilige Auflagerfläche sowie die Lage der Schweißnaht oder der Schweißnähte des Rohres zu dem Auflager oder den Auflagern festgelegt werden. Aufgrund der Tatsache, dass das Rohr ausschließlich von innen gelagert wird, kann erstmals die Erfassung der gesamten dreidimensionalen Form des Rohres über seine gesamte Länge erfolgen. Gegebenfalls kann im gleichen Arbeitsschritt, alternativ hierzu aber auch in Kombination mit einem weiteren Messverfahren, auch die Form der Rohrenden, die üblicherweise zum Einbringen von Verbindungsschweißnähten eine vorab definierte Gestalt aufweisen müssen, ebenfalls gemessen werden.

Im erfindungsgemäßen Sinne wird somit ermöglicht, eine vollständige dreidimensionale Form des Rohres ohne Ausführen einer Vielzahl von Messoperationen in diskreten Schritten über die Rohrlänge ausführen zu müssen, zu erfassen.

In einer bevorzugten Ausführungsform der erfindungsgemäßen Vorrichtung weist die Haltestruktur zwei in die jeweiligen Rohrenden eingreifende und an vorzugsweise vorab definierten Punkten der Rohrenden angreifende Auflager auf. Besonders bevorzugt wird hierbei, wenn die vorab definierten Punkte der Rohrenden im Bereich der Bessel'schen Punkte liegen, wobei bei einer Rohrlänge von üblicherweise 12,5 bis 18 m für Pipelinerohre Abweichungen von +/- 25 cm, besonders bevorzugt +/- 5 cm, von den errechneten Bessel'schen Punkte als tolerabel erachtet werden. Überaus bevorzugt wird jedoch, wenn die Auflagepunkte mit den Bessel'schen Punkten des gelagerten Rohres nahezu übereinstimmen, somit weniger als 1 cm von diesen entfernt angeordnet sind. Die Bessel'schen Punkte beschreiben die optimalen Positionen der Auflager eines gleichmäßig belasteten Balkens, welcher sich unter seinem eigenen Gewicht oder dem einer gleichmäßig verteilten Last elastisch verbiegt. Die Bessel'schen Punkte, die bevorzugt als Auflagerpunkte für das von der Haltestruktur gehaltene Rohr dienen sollen, liegen somit im Bereich des Minimums der mittleren Durchbiegung, wodurch eine geringstmögliche Durchbiegung des Rohres bei der Messung bewirkt wird. Hierdurch wird das Messergebnis bei der Erfassung der dreidimensionalen Form des Rohres besonders vorteilhaft optimiert.

Aus Gründen der Standardisierung des erfindungsgemäßen Verfahrens empfiehlt sich daher, die Bessel'schen Punkte sowie die maximal tolerablen Abweichungen der Auflager von den Bessel'schen Punkten festzulegen, um ggf. Standarddurchbiegungen der erfassten Rohre quantifizieren sowie qualifizieren zu können.

In einer weiteren bevorzugten Ausführungsform der erfindungsgemäßen Vorrichtung umfasst die Einrichtung zur Erfassung der Rohrform zumindest eine Lichtquelle und wenigstens einen Empfänger für die von der Rohroberfläche gestreuten Lichtstrahlen. Derartige Lichtquellen sind beispielsweise eine Superlumineszenzdiode oder eine Weißlichtquelle, deren von der Rohroberfläche gestreutes Licht von einem Empfänger detektiert werden kann. Verwendung findet im erfindungsgemäßen Sinne jedes optische Messgerät, umfassend eine Lichtquelle und einen Empfänger. Bevorzugt wird jedoch, wenn die Einrichtung zur Erfassung der Rohrform zumindest eine Laserquelle und zumindest einen Laserdetektor umfasst.

Hierdurch wird eine Vorrichtung zur Verfügung gestellt, die mit besonders genau arbeitenden Mitteln eine hochpräzise Erfassung der Rohrform erlaubt. Die Messung erfolgt überdies schnell und kann bauraumsparend in geeignete Tragstrukturen integriert werden.

Die Lichtquelle projiziert vorzugsweise Lichtstrukturen, insbesondere Punkte, Linien oder Muster auf die Oberfläche des Rohres. Diese Lichtstrukturen können besonders bevorzugt örtlich und / oder zeitlich verändert werden. Die Detektion und Auswertung der gestreuten Lichtstrukturen erfolgt dann durch einen Empfänger und vorzugsweise mit einer geeigneten Steuerungs- und Speichereinheit, über die dann die Bestimmung der (zweidimensionalen) Querschnittskontur und der (dreidimensionalen) Form des Rohres selbst ermöglicht wird.

In einer weiteren bevorzugten Ausgestaltungsform der erfindungsgemäßen Vorrichtung umfasst die Einrichtung zur Erfassung der Rohrform einen Rahmen, der das Rohr senkrecht zu dessen Längsausrichtung vorzugsweise vollständig umschließt. Besonders bevorzugt wird in diesem Zusammenhang, wenn eine Vielzahl von Lichtquellen, vorzugsweise Laserermitter, vorzugsweise äquidistant über den Umfang des Rahmens angeordnet sind. Überaus bevorzugt wird in diesem Zusammenhang, wenn 16 bis 24 Laserermitter und eine entsprechende Anzahl von Empfängern über den Umfang des Rahmens angeordnet sind. Hierdurch kann mit einem vergleichsweise einfachen Aufbau der Tragstruktur für die einzelnen Lichtquellen sichergestellt werden, dass zum einen der Gesamtumfang des Rohres gleichzeitig während eines Mess- oder Erfassungsvorgangs erfasst werden kann und zum anderen eine sichere und gleichbleibende Ausrichtung und Anordnung der einzelnen Lichtquellen zur Rohroberfläche gewährleistet ist.

Besonders bevorzugt wird in diesem Zusammenhang, wenn der Rahmen aus einzelnen Rahmensegmenten besteht, die jeweils eine gleiche Anzahl von Lichtquellen und Empfängern tragen. Hierdurch wird der komponentenweise Austausch und Aufbau der Einrichtung zur Erfassung der dreidimensionalen Rohrform mit besonders einfachen und effektiven Mitteln unterstützt.

Überaus bevorzugt wird, wenn wenigstens eine Lichtquelle innerhalb des Rahmens zumindest radial, vorzugsweise sowohl radial als auch tangential, verschiebbar angeordnet ist. Insbesondere wird bevorzugt, wenn die Lichtquellen innerhalb eines Rahmensegmentes über geeignete Stellmittel gruppenweise verschiebbar angeordnet sind, um somit eine effektive Anpassung der Einrichtung zur Erfassung der dreidimensionalen Rohrform an den jeweiligen zu erfassenden Rohrquerschnitt vornehmen zu können.

Bevorzugt wird in diesem Zusammenhang, wenn die Lichtquellen Lichtstrukturen auf die Oberfläche projizieren, die vorzugsweise überlappend den gesamten Umfang des zu erfassenden Rohres bedecken, um somit eine vollständige und lückenlose Erfassung der dreidimensionalen Form des Rohres zu gewährleisten. Dies wird insbesondere dann besonders vorteilhaft unterstützt, wenn die Einrichtung zur Erfassung der Rohrform über die gesamte Länge des ruhenden Rohres verfahrbar ist, wobei wie eingangs erwähnt hierbei vor allem dem Umstand Rechnung getragen wird, dass jede Bewegung des Rohres zu einer Messungenauigkeit und somit unpräziseren Erfassung der dreidimensionalen Rohrform führen könnte.

In einer weiteren bevorzugten Ausführungsform der erfindungsgemäßen Vorrichtung sowie des erfindungsgemäßen Verfahrens kann das Rohr in eine definierte Winkellage gedreht werden, um beispielsweise eine vorab festgelegte Ausrichtung der Schweißnaht innerhalb der Haltevorrichtung, beispielsweise auf 12 Uhr oder 3 Uhr, einzunehmen. Besonders bevorzugt wird in diesem Zusammenhang eine Drehvorrichtung an den Auflagen, beispielsweise in der Form von wenigstens einem Rollenprisma. Ebenso besonders bevorzugt wird ein Mittel zum Drehen des Rohres um seine Längsachse, das nicht mit der Haltevorrichtung verbunden ist, sondern das Rohr in die definierte Drehlage bringt, bevor es auf den Auflagen anliegt.

In einer bevorzugten Ausführungsform des erfindungsgemäßen Verfahrens bedient sich dieses der erfindungsgemäßen Vorrichtung zur Erfassung der dreidimensionalen Form eines Rohres. Die mit dem erfindungsgemäßen Verfahren erzielten Effekte stimmen somit mit denjenigen überein, die bei Anwendung der erfindungsgemäßen Vorrichtung inklusive deren bevorzugter Ausführungsform erzielt werden können.

Das erfindungsgemäße Verfahren umfasst zumindest die Schritte des Haltens des Rohres sowie des Erfassens der Rohrform, wobei das Halten des Rohres mittels zumindest eines Auflagers zum Abstützen des Rohres von innen erfolgt und ein berührungsloses Erfassen der Rohrform durchgeführt wird, bei dem das Rohr und die Einrichtung zur Erfassung der Rohrform über die gesamte Länge des Rohres relativ zueinander bewegt werden.

Vorzugsweise wird das Rohr über geeignete Mittel wie etwa einen Rollgang zu der Haltestruktur für das Rohr und der Einrichtung zur Erfassung der Rohrform befördert, dann von der Haltestruktur ergriffen und schließlich entweder von dem Rollgang angehoben oder aber durch Absenken zumindest von Rollgangssegmenten ausschließlich von der Haltestruktur gehalten. Bevorzugt überstreicht dann die Einrichtung zur Erfassung der Rohrform das ruhende Rohr über dessen gesamte Länge, um so berührungslos die dreidimensionale Rohrform zu erfassen.

Besonders bevorzugt wird, wenn vor Beginn der Erfassung die wenigstens eine Lichtquelle, vorzugsweise der wenigstens eine Laserermitter, innerhalb eines die Lichtquelle oder Lichtquellen tragenden Rahmens zumindest radial zur Rohroberfläche angestellt werden, wodurch besonders bevorzugt ein gleicher Abstand jeder Lichtquelle von der Rohroberfläche einstellbar ist. Besonders bevorzugt erfolgt auch eine tangentiale Einstellung der örtlichen Lage einer oder mehrerer Lichtquellen, somit eine Verschiebung der Lichtquelle im Wesentlichen senkrecht zur radialen Anstellbewegung, um so eine vorzugsweise äquidistante Ausrichtung aller Lichtquellen der Erfassungseinrichtung zum zu erfassenden Rohr zu verwirklichen,

Insbesondere wird bevorzugt, wenn das Rohr während der Erfassung der Rohrform ausschließlich auf der Haltestruktur, vorzugsweise auf den vorzugsweise vorab definierten Punkten der Rohrinnenwand umgreifenden Auflagern, aufliegt. Hierdurch wird gewährleistet, dass ein reproduzierbares und vorzugsweise standardisierte Verfahren zur Erfassung der dreidimensionalen Rohrform ohne Einflüsse von außen auf das Messergebnis zur Verfügung gestellt werden kann.

### 5. Kurze Beschreibung der Zeichnungen

Die Erfindung wird im Folgenden unter Verweis auf 6 Figuren näher erläutert, wobei diese Figuren schematisch eine bevorzugte Ausführungsform der Erfindung darstellen.

In den Figuren zeigt
- Figur 1: eine schematische Seitenansicht einer erfindungsgemäßen Vorrichtung zum Erfassen der dreidimensionalen Form eines Rohres,
- Figur 2: eine schematische Seitenansicht eines Zufuhrschrittes des zu erfassenden Rohres in eine erfindungsgemäße Vorrichtung,
- Figur 3: schematisch einen zweiten Schritt der Zufuhr des zu erfassenden Rohres in eine erfindungsgemäße Vorrichtung,
- Figur 4: einen dritten Schritt der Zufuhr des zu erfassenden Rohres in eine erfindungsgemäße Vorrichtung,
- Figur 5: die Verwendung der erfindungsgemäßen Vorrichtung während des Erfassens der dreidimensionalen Rohrform und
- Figur 6: eine Ausführungsform für eine erfindungsgemäße Einrichtung zur Erfassung der dreidimensionalen Rohrform.

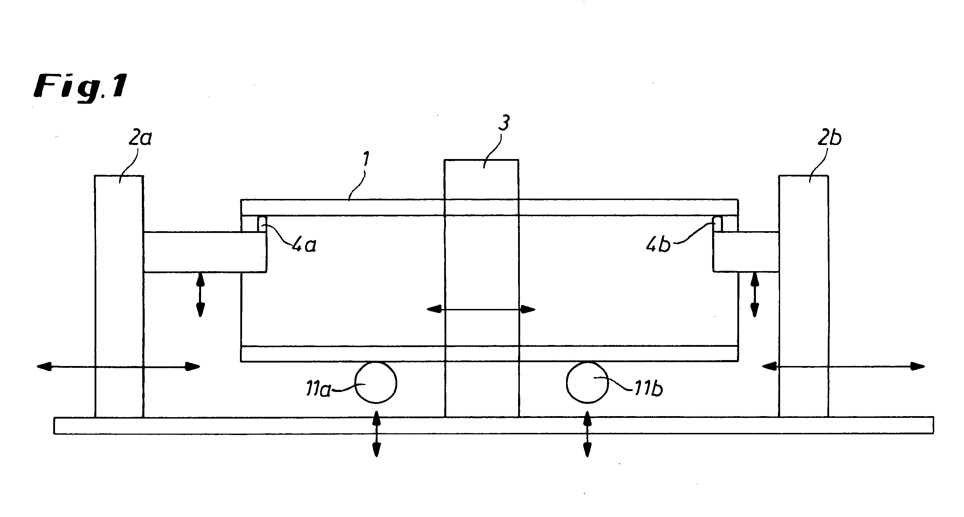

Figur 1 zeigt eine schematische Seitenansicht einer erfindungsgemäßen Vorrichtung zum Erfassen der dreidimensionalen Form eines Rohres 1, umfassend eine Zufuhrvorrichtung für das Rohr mit zwei heb- und senkbaren Rollgangsrollen 11a, 11 b und zwei Haltestrukturen 2a, 2b, umfassend zwei heb- und senkbare Auflager 4a, 4b. Die Haltestrukturen 2a, 2b sind jeweils an das Rohr 1 heranfahrbar und von diesem wieder weg bewegbar vorgesehen. Schließlich umfasst die Vorrichtung eine Einrichtung 3 zur Erfassung der Rohrform, die über die gesamte Rohrlänge hinweg beweglich ist und vorzugsweise den gesamten Umfang des durch die Haltestrukturen 2a, 2b gehaltenen Rohres 1 zu Erfassen in der Lage ist.

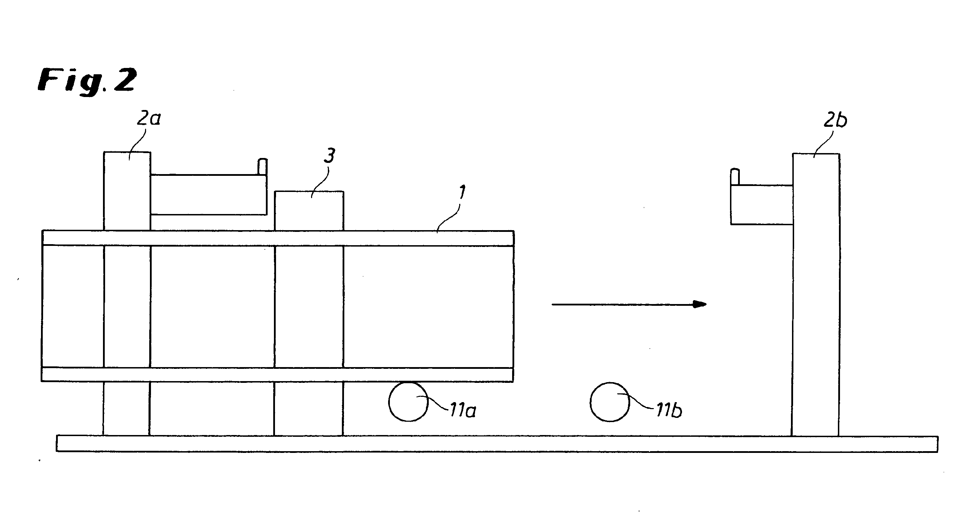

Figur 2 zeigt einen ersten Schritt der Zufuhr des Rohrs 1 in die erfindungsgemäße Vorrichtung. Das Rohr 1 wird mittels der angehobenen Rollgangsrollen 11a, 11b von links nach rechts zwischen die beiden Haltestrukturen 2a, 2b befördert, wobei auch ein Quertransport des Rohres zwischen die Haltestrukturen 2a, 2b möglich ist. Die Einrichtung 3 zur Erfassung der Rohrform ist während diesen Arbeitsschritten bereits zwischen den Haltestrukturen 2a, 2b in der Form eines Ringes angeordnet, wobei das Rohr 1 bei der Zufuhr zwischen die Haltestrukturen 2a, 2b durch den im Wesentlichen geschlossenen Ring eines Rahmens der Einrichtung 3 hindurchgeführt wird.

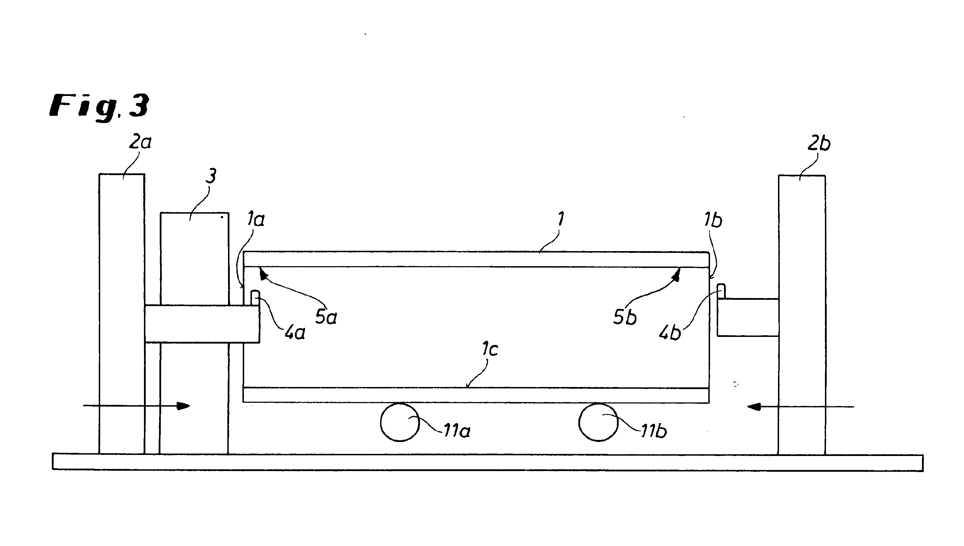

Figur 3 zeigt einen zweiten Schritt der Zufuhr des zu erfassenden Rohrs 1 in die erfindungsgemäße Vorrichtung. Das Rohr 1 liegt noch auf den angehobenen Rollgangsrollen 11a, 11b auf, wobei die Haltestrukturen 2a, 2b mit den abgesenkten Auflagern 4a, 4b jeweils auf das Rohr 1 hin zueinander bewegt werden und das Auflager 4a bereits durch das linke Rohrende 1a hindurch unterhalb des definierten Punkts 5a der Rohrinnenwand 1c platziert ist. Die rechte Haltestruktur 2b ist dagegen noch nicht soweit auf das Rohr 1 hinbewegt worden, dass das Auflager 4b durch das rechte Rohrende 1 b hindurch unter dem definierten Punkt 5b für das Auflager 4b angelangt wäre. Die Einrichtung 3 zur Erfassung der Rohrform ist in diesem Arbeitsschritt in einer Ruheposition seitlich vom Rohr 1 entfernt angeordnet.

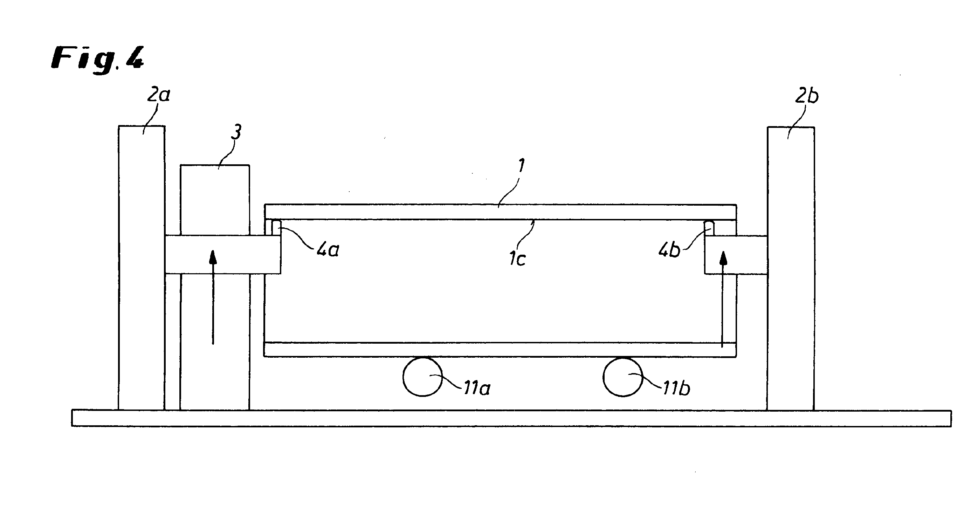

Figur 4 zeigt schematisch einen weiteren Schritt der Zufuhr des Rohrs 1 in die erfindungsgemäße Vorrichtung hinein. Die Auflager 4a, 4b der Haltestrukturen 2a, 2b stehen in Kontakt mit der Rohrinnenwand 1c und werden weiter angehoben, um das Rohr 1 von den Rollgangsrollen 11a, 11b anzuheben. Zu diesem Zeitpunkt ist der Umfang des Rohrs 1 noch nicht vollständig frei, so dass die Einrichtung 3 zur Erfassung der Rohrform weiterhin in der Ruheposition aus Figur 3 verbleibt.

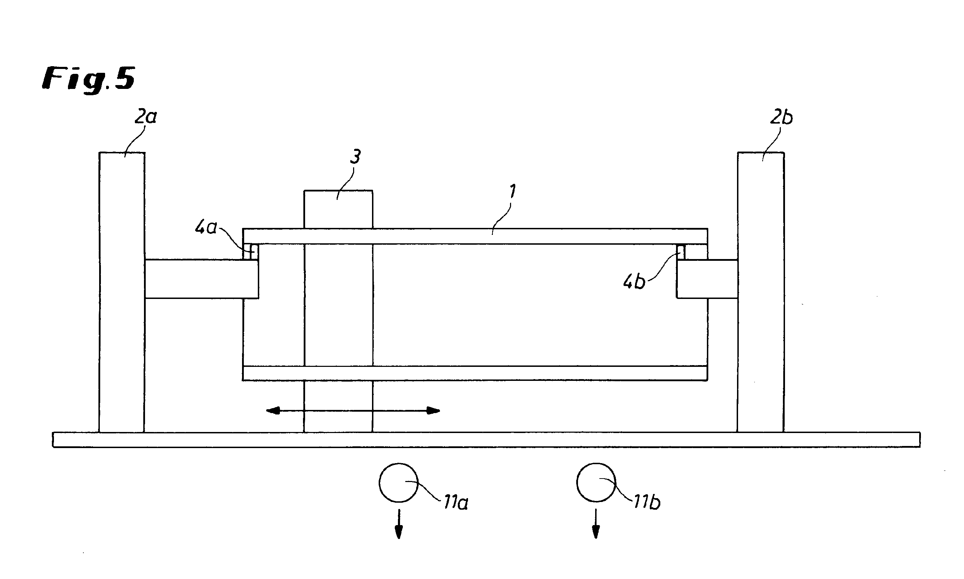

Figur 5 zeigt die erfindungsgemäße Vorrichtung während des Durchführens des erfindungsgemäßen Verfahrens, wobei das Rohr 1 ausschließlich durch die Auflager 4a, 4b der Haltestrukturen 2a, 2b gehalten wird. Die Rollgangsrollen 11a, 11b sind in eine Ruheposition abgesenkt worden, so dass das Rohr 1 ausschließlich von innen gestützt innerhalb der Vorrichtung gehalten wird. Die Einrichtung 3 kann nunmehr über die gesamte Länge des Rohrs 1 zwischen den Haltestrukturen 2a, 2b hin- und herbewegt werden, um berührungslos die gesamte Form des Rohrs 1 dreidimensional zu erfassen und abzubilden.

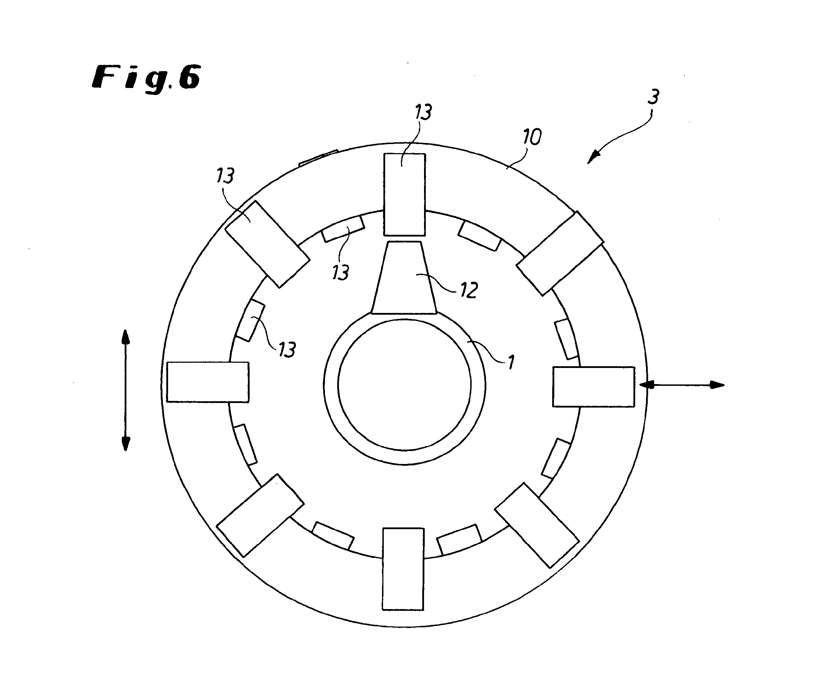

Figur 6 schließlich zeigt den Rahmen 10 einer erfindungsgemäßen Einrichtung 3 zur Erfassung der Form eines Rohrs 1. Wie ersichtlich, ist das Rohr 1 konzentrisch mit dem runden Rahmen 10 angeordnet, wobei der Rahmen 10 zur genauen Ausrichtung des Rahmens 10 zum Rohr 1 sowohl horizontal als auch vertikal beliebig verstellt werden kann. Innerhalb des Rahmen 10 sind äquidistant zueinander 16 Einheiten 13 angeordnet, wobei 8 Einheiten 13 an der Vorderseite und 8 Einheiten 13 an der Rückseite des Rahmens 10 vorgesehen sind.

Jede dieser Einheiten 13 enthält eine Laserstrahlquelle sowie eine Strahlformungsoptik, die aus dem Laserstrahl eine Laserlinie formt, der schematisch als fächerförmige Lichtstruktur 12 unterhalb der oberen Einheit 13 dargestellt ist. Jede Einheit 13 umfasst schließlich auch eine Detektoreinheit, im dargestellten Fall einen Bilddetektor. Die einzelnen Einheiten 13 sind jeweils in Richtung auf das Rohr 1 hin und von diesem weg innerhalb des Rahmens 10 radial einstellbar angeordnet, so dass die von der Einheit 13 emittierte Lichtstruktur 12 einen vorab definierten Teilumfang des Rohrs 1 abdeckt. Von der Oberfläche des Rohrs 1 gestreutes Licht wird dann von dem jeder Einheit 13 zugeordneten Detektor aufgenommen und einer geeigneten bildgebenden Einheit zugeführt, um hier die dreidimensionale Form des Rohrs 1 vollständig wiederzugeben. Die radiale Zustellung der Einheiten 13, vorzugsweise Lasersensoren, auf das Rohr 1 hin wird bevorzugt, um eine möglichst hohe Messgenauigkeit zu erreichen, da das Messfeld der Einheiten 13 üblicherweise begrenzt ist. Gleichzeitig wird aber auch gewünscht, mit der selben Anlage ein großes Spektrum von Rohrdurchmessern messen zu können.

## Patentansprüche

1. Vorrichtung zum Erfassen der dreidimensionalen Form eines Rohres (1), umfassend eine Haltestruktur (2) für das Rohr (1) sowie eine Einrichtung (3) zur Erfassung der Rohrform, **dadurch gekennzeichnet, dass** die Haltestruktur wenigstens ein Auflager (4) zum Abstützen des Rohres (1) von innen aufweist und die Einrichtung (3) zur Erfassung der Rohrform ein berührungsloses Erfassen der Rohrform erlaubt, wobei das Rohr (1) und die Einrichtung (3) zur Erfassung der Rohrform über die gesamte Länge des Rohres (1) relativ zueinander beweglich angeordnet sind.

2. Vorrichtung gemäß Anspruch 1, **dadurch gekennzeichnet, dass** die Haltestruktur (2) zwei in die jeweiligen Rohrenden (1a, 1b) eingreifende und an vorzugsweise vorab definierten Punkten (5a, 5b) der Rohrinnenwand (1 c) angreifende Auflager (4a, 4b) aufweist.

3. Vorrichtung gemäß Anspruch 2, **dadurch gekennzeichnet, dass** die vorab definierten Punkte (5a, 5b) der Rohrinnenwand (1c) im Bereich der Bessel'schen Punkte liegen, vorzugsweise mit den Bessel'schen Punkten des gelagerten Rohres (1) übereinstimmen.

4. Vorrichtung gemäß einem der voranstehenden Ansprüche, **dadurch gekennzeichnet, dass** die Einrichtung (3) zur Erfassung der Rohrform zumindest eine Lichtquelle (6), vorzugsweise wenigstens einen Laseremitter, und wenigstens einen Empfänger (7) für die von der Rohroberfläche (1d) gestreuten Lichtstrahlen, vorzugsweise Laserstrahlen, umfasst.

5. Vorrichtung gemäß Anspruch 4, **dadurch gekennzeichnet, dass** durch die Lichtquelle (6) einen Lichtstruktur (9), vorzugsweise ein Punkt oder eine Linie, ganz bevorzugt ein Muster, auf das Rohr (1) projizierbar ist.

6. Vorrichtung gemäß einem der voranstehenden Ansprüche, **dadurch gekennzeichnet, dass** die Einrichtung (3) zur Erfassung der Rohrform einen Rahmen (10) umfasst, der einen Rohrquerschnitt vorzugsweise vollständig umschließt.

7. Vorrichtung gemäß Anspruch 6, **dadurch gekennzeichnet, dass** eine Vielzahl, vorzugsweise 16 bis 24, von Lichtquellen (6), vorzugsweise Laseremittern, vorzugsweise äquidistant über den Umfang des Rahmens (10) angeordnet sind.

8. Vorrichtung gemäß einem der Ansprüche 6 oder 7, **dadurch gekennzeichnet, dass** die wenigstens eine Lichtquelle (6), vorzugsweise Laseretnitter, innerhalb des Rahmens (10) zumindest radial, vorzugsweise sowohl radial als auch tangential, verschiebbar angeordnet ist.

9. Vorrichtung gemäß einem der voranstehenden Ansprüche, **dadurch gekennzeichnet, dass** die Einrichtung (3) zur Erfassung der Rohrform über die gesamte Länge des Rohres (1) verfahrbar ist.

10. Vorrichtung gemäß einem der voranstehenden Ansprüche, **dadurch gekennzeichnet, dass** ein Mittel zum Drehen des Rohres (1) um seine Längsachse, vorzugsweise wenigstens ein Rollenprisma, vorgesehen ist.

11. Verfahren zum Erfassen der dreidimensionalen Form eines Rohres (1), umfassend die Schritte des Haltens des Rohres (1) sowie des Erfassens der Rohrform, **dadurch gekennzeichnet, dass** das Halten des Rohres (1) mittels zumindest eines Auflagers (4) zum Abstützen des Rohres (1) von innen erfolgt und ein berührungsloses Erfassen der Rohrform durchgeführt wird, wobei die Erfassung der Rohrform über die gesamte Länge des Rohres (1) erfolgt.

12. Verfahren gemäß Anspruch 11, **dadurch gekennzeichnet, dass** die Einrichtung (3) zur Erfassung der Rohrform über die gesamte Länge des ruhenden Rohres (1) geführt bewegt wird.

13. Verfahren gemäß einem der Ansprüche 11 oder 12, **dadurch gekennzeichnet, dass** zumindest eine Lichtquelle (6), vorzugsweise wenigstens ein Laseremitter, eine Lichtstruktur, vorzugsweise einen Punkt oder eine Linie, ganz bevorzugt ein Muster, auf das Rohr (1) projiziert.

14. Verfahren gemäß einem der Ansprüche 11 bis 13, **dadurch gekennzeichnet, dass** die wenigstens eine Lichtquelle (6), vorzugsweise Laseremitter, vor Beginn der Erfassung der Rohrform innerhalb des Rahmens (10) zumindest radial, vorzugsweise sowohl radial als auch tangential, so verschoben wird, dass ein vorab definierter Abstand, vorzugsweise auch eine vorab definierte örtliche Lage der Lichtquelle (6), zur Rohroberfläche eingestellt wird.

15. Verfahren gemäß einem der Ansprüche 11 bis 14, **dadurch gekennzeichnet, dass** das Rohr (1) während der Erfassung der Rohrform ausschließlich auf der Haltestruktur (2), vorzugsweise auf den an vorzugsweise vorab definierten Punkten (5a, 5b) der Rohrinnenwand (1c) angreifenden Auflagern (4a, 4b), aufliegt.
